# EUROPEAN PATENT SPECIFICATION

(11) **EP 1 654 840 B1**
(45) Date of publication and mention of the grant of the patent: **09.08.2017**
(21) Application number: 04755534.7
(22) Date of filing: 18.06.2004
(51) Int. Cl.: H04M 1/253, H04W 48/18, H04M 1/725, H04W 36/14, H04W 52/02, H04W 88/06

(54) **HYBRID WIRELESS IP PHONE SYSTEM AND METHOD FOR USING THE SAME**
HYBRIDES DRAHTLOSES IP-TELEFONSYSTEM UND VERFAHREN ZU SEINER VERWENDUNG
SYSTÈME TÉLÉPHONIQUE IP HERTZIEN HYBRIDE ET PROCÉDÉ D'UTILISATION

(30) Priority: 20.06.2003 US 600084
(43) Date of publication of application: 10.05.2006
(73) Proprietor: Cisco Technology, Inc., San Jose, CA 95134 (US)
(72) Inventor: AMOS, James A., North Canton, OH 44720 (US)
(74) Representative: Kazi, Ilya
(86) International application number: PCT/US2004/019412
(87) International publication number: WO 2004/114612

(56) References cited:
- EP-A- 1 119 137
- WO-A-01/97454
- WO-A-02/093811
- US-A1- 2002 075 844
- US-A1- 2003 100 308

## Description

### Background of the Invention

The present invention pertains generally to wireless communication devices and, more particularly, to a method and system of communication incorporating wireless Voice over Internet Protocol.

A protocol is a specific rule of transferring information. Two computer systems exchange information using common protocols. For example, Transmission Control Protocols (TCP) is a connection-oriented protocol that keeps track of data packets for efficient routing through the internet. Data packets, also called datagrams, which are individual units of the message data, or more precisely, a sequence of binary digits, including data and control signals, that is transmitted and switched as a composite whole. The data, control signals, and possibly error control information, are arranged in a special format. TCP takes care of packet sequence in a particular message and puts data packets back in the right order. Internet Protocols (IP) is a connectionless protocol that actually delivers the message data packets. The IP provides a rule for transmitting data packets from source to destinations and also provides for fragmentation and reassembly of long data packets. The combination of TCP and IP (TCP/IP) establishes a method for transmitting data as well as integrity of data transmission across an internet.

Voice over Internet Protocol (VOIP) is based on sending voice information in digital form in discrete packets. Since voice is considered a time-dependent application, a transport protocol known as Real-Time Transport Protocol (RTP) is used. RTP is designed to provide end-to-end network transport functions for applications transmitting real-time data - such as audio, video or simulation data - over multicast or uni-cast network services. RTP provides services such as payload type identification, sequence numbering, time-stamping, and delivery monitoring to real-time applications. Therefore, VOIP represents the ability to carry telephony style voice over an IP-based network with like functionality, reliability and voice quality of a Public Switched Telephone Network (PSTN). Translation through Time Division Multiplexing (TDM) voice is packetized by a Digital Signal Processor (DSP), which resides in the microprocessor of the VOIP phone. That is, the DSP segments the voice signal into frames and stores them in voice packets. Once the voice is packetized, i.e., converted to digital datagrams or data packets, it can then be routed over an IP network, such as an Ethernet network, using IP in compliance with one of a number of specifications for transmitting multimedia (voice, video, fax and data) across such a network. VOIP separates the signaling over voice calls from the bearer portion of the voice calls (the audio). The signaling is handled by H.248, H.323, MGCP, or SIP protocols. The bearer is carried by RTP. Wireless Voice over Internet Protocol (WVOIP) functions in much the same manner as VOIP, but without the need to connect the WVOIP phone to a wired network connection. The protocols and advantages are the same as a VOIP phone, but the transmission to the network is accomplished using a radio transceiver and not a wired connection.

VOIP and WVOIP have several distinct advantages over the existing telephone infrastructure, i.e., the PSTN, most particularly the costs. When utilizing a standard PSTN, charges are incurred upon connection, surcharge for line use, time spent using a telephone line and the distance between callers may add charges. Both VOIP and WVOIP are distance independent. Provided the recipient is connected to the Internet or other network at the same time as the caller, the distance between the two does not increase the cost. Furthermore, use of VOIP or WVOIP allow one caller to not only speak with a recipient, but concurrently send and receive data, images, graphs, charts and other files. Furthermore, VOIP and WVOIP provide for the ability to speak with multiple people at different locations without the need to have the PSTN install additional lines. The utilization of WVOIP does present several limitations, which will be addressed below.

A local area network (LAN) is a data communications system that lies within a limited spatial area, has a specific user group, has a specific topology, and is not a public switched telecommunications network, but may be connected to one. The Institute of Electrical and Electronic Engineers (IEEE) have instituted a standard for the implementation and equipment for wireless local area networks (WLAN). This standard is commonly referred to as IEEE 802.11 and is incorporated herein. The IEEE 802.11 standard specifies a common medium access control (MAC) Layer, which provides a multitude of functions that act to support the operation of an IEEE 802.11-based wireless LAN. In simplest terms, the IEEE 802.11 MAC Layer manages and maintains communications between IEEE 802.11 stations (e.g., radio network cards, access points) by coordinating access to a shared radio channel and utilizing protocols that enhance communications over a wireless medium. IEEE 802.11 MAC Layer often utilizes the Physical Layer (PHY) of an IEEE 802.11(a), (b) or (g), to perform the tasks of carrier sensing, transmission, and receiving of 802.11 frames.

An IEEE 802.11x wireless LAN is based on cellular architecture where the system is subdivided into cells. Each cell (called Basic Service Set, or BSS, in the IEEE 802.11 nomenclature) is controlled by a Base Station, called Access Point (AP). Although a wireless LAN may be formed by a single cell, with a single Access Point, (or no Access Point), most installations will be formed by several cells, where the Access Points are connected through some kind of backbone (called Distribution System or DS). This backbone is typically Ethernet, but may be any other type of network, such as a token ring. The whole interconnected Wireless LAN, including the different cells, their respective Access Points and the Distribution System, is seen as a single 802 network to the upper layers of the OSI model and is known in the Standard as Extended Service Set (ESS).

When a station wants to access a BSS (either after power-up, sleep mode, or just entering the BSS area), the station needs to get synchronization information from the Access Point (or from the other stations when in ad-hoc mode). There are two methods for a station to obtain this information. The first method is called Passive Scanning, and in this case, the station just waits to receive a Beacon Frame from the AP (the Beacon Frame is a frame sent out periodically by the AP containing synchronization information). The second method a station may use is called Active Scanning. While in Active Scanning, the station tries to locate an Access Point by transmitting Probe Request Frames, and waits for Probe Response from the AP. Either method may be used, the choice is made according to the power consumption/performance trade-off.

Once the station has located an Access Point and decides to join its BSS, it must go through an Authentication Process. This process is the exchange of information between the AP and the station, during which each side provides the knowledge of a given password, thereby proving each station's respective identity After the station is authenticated, the next step is called the Association Process, which is the exchange of information about the stations and BSS capabilities, and which allows the DSS (the set of APs) to know about the current position of the station. The station initiates the association by sending an association request frame. The AP responds by sending an association response frame containing an association ID along with other information regarding the access point. A station is capable of transmitting and receiving data frames only after the association process is completed.

The optional power save mode, available under the IEEE 802.11x standard, that a user can turn on or off enables the station to conserve battery power when there is no need to send data. With power save mode on, the station indicates its desire to enter "sleep" state to the access point via a status bit located in the header of each frame. The access pint takes note of each station wishing to enter into power save mode and buffers packets corresponding to the sleeping station. In order to still receive data frames, the sleeping station must wake up periodically (at the right time) to receive regular beacon transmissions coming from the access point. These beacons identify whether sleeping stations have frames buffered at the access point. After receiving the frames, the station can go back to sleep.

Bluetooth is a wireless specification delivering short-range radio communication between electronic devices that are equipped with specialized Bluetooth chips. This wireless specification allows devices to communicate with one another by creating a common language between them. All devices such as cellular telephones, Personal Digital Assistants, pagers, stereos and other home appliances can communicate and connect using Bluetooth technology to form a private, Personal Area Network (PAN). Unlike the IEEE 802.11x specification, the Bluetooth specification standard defines a short-range (10-meter) radio link. Devices incorporating Bluetooth chips can easily transfer data at a rate of about 720 Kbps (kilobits per second) within 10 meters of range through walls, clothing and luggage bags. The interaction between devices occur by itself without direct human intervention whenever they are within each other's range. In this process, the software technology embedded in the Bluetooth transceiver chip triggers an automatic connection to deliver and accept the data flow.

Bluetooth enabled devices are limited to short range and low-power. Each Bluetooth-enabled device contains a transceiver operating in the industrial, scientific and medical (ISM) radio frequency band of 2.40 GHz to 2.48 GHz. This frequency is generally available worldwide for free without any licensing restrictions. The ISM band is divided into 79 channels with each carrying a bandwidth of 1 MHz. In each transceiver chip a software is embedded called a link controller. this mechanism performs the functions of identifying other Bluetooth devices, connecting and transferring of data.

Whenever devices carrying Bluetooth technology are within each other's range, they create an automatic ad hoc PAN called a piconet. In this arrangement, one device acts as the "master" such as a laptop or PDA, while other devices function as "slaves" such as printers, scanners, etc. A piconet normally carries up to eight devices. The master device decides if a particular communication service is needed from a slave device. At the time when a connection is made between Bluetooth devices, an exchange of unique Bluetooth identity called global ID takes place. A device global ID indicates its profile along with its capability functions. Upon matching of the device profile a connection is made and as the devices exchange data, the Bluetooth transceiver chip hops back and forth among the frequencies. A scatternet forms if a device from one piconet also acts as a member of another piconet.

The utilization of IEEE 802.11x presents limitations to the WVOIP phone, the main drawback to which is the increased demand on IEEE 802.11x WLAN infrastructure thereby limiting the number of WVOIP phones that may be used on the WLAN. By way of example, in many companies utilizing a WLAN, the use of wireless IP phones is discouraged. Wireless networks are limited in the amount and number of transmissions that it can handle. Since VOIP has a constant high packet rate, the bandwidth available on the WLAN AP is diminished for each wireless VOIP transmission. This equates to a low number of wireless IP phones that any given WLAN can handle, without severely comprising other types of WLAN transmission, e.g., data. Furthermore, the current WVOIP phones in utilizing solely IEEE 802.11x links require a considerable amount of power to maintain active scanning thereby significantly limiting the lifetime of a battery or other power source.

The use of Bluetooth technology in a WVOIP allows the transfer of data packets in much the same manner as IEEE 802.11x compliant devices while at the same time utilizing substantially less power. However, this lower power consumption affects the range of the Bluetooth transceiver, limiting it to 10 meters. The benefits of using a WVOIP phone are significantly reduced when the phone is tied to such a small radius of the Bluetooth enabled device. For example, taking such a WVOIP phone from a user's office to the factory floor 40 feet away would render the WVOIP phone useless and result in loss of signal.

US2003/100308 A1 discloses a wireless communication device that includes one or more radio interfaces to communicate using various wireless protocols with different communication networks. A multi-channel radio controller within the wireless device characterizes available communication networks to determine network characteristics including current network information. A wireless connectivity assistant may select a communication network and service based on the network characteristics and at least one of user preferences, application requirements and system information. US 2002/075844 A1 discloses a system and method for providing ubiquitous public network access to wireless, mobile terminals using private networks having private network access points and connections with the public network. A network access server (NAS) is associated with each wireless, radio frequency communication device and provides an interface between the wireless, mobile terminals and the private network. The NAS controls registration of wireless, mobile terminals as subscribers, and provides public network access to the mobile terminals through the private network's access point and public network connection. WO 02/093811 A2 discloses an interface device for interfacing between a PLMN network and a non-PLMN network, the PLMN network being configured to recognize cellular base stations as nodes thereof through which to mediate connections to cellular mobile devices, the non-PLMN networks each comprising a plurality of access points for mediating connections to network compatible mobile devices, and for which the network compatible mobile devices are not required to be cellular devices.

Thus, there exists a need for a seamless, integrated system which utilizes the benefits of both IEEE 802. 11 and Bluetooth wireless links to alleviate the demand on the wireless Local Area Network and reduce the power consumption of the wireless Voice over Internet Protocol phone.

### Summary of the Present Invention

The present invention provides for a method of combining two different wireless connections to reduce the use of bandwidth on the IEEE 802. 11 WLAN and decreasing the amount of power required to operate a WVOIP mobile node when possible. The present invention is directed to a system and method for sending and receiving Voice-over-Internet-Protocol over a wireless computer network utilizing a hybrid wireless Voice-over-Internet-Protocol telephone

In accordance with the present invention, there is provided a wireless voice over Internet Protocol telephone, a system for sending and receiving voice over Internet Protocol using a wireless voice over Internet Protocol telephone, and a method for a wireless handset to send and receive voice over Internet Protocol using a wireless voice over Internet Protocol telephone as set out in the claims.

Additional objects, advantages and novel features of the invention will be set forth in part in the description which follows, and in part will become apparent to those skilled in the art upon examination of the following or may be learned by practice of the invention. The objects and advantages of the invention may be realized and attained by various structures and methods as covered by the patent claims.

### Brief Description of the Drawings

The accompanying figures incorporated in and forming a part of the specification, illustrates several aspects of the present invention, and together with the description serve to explain the principles of the invention. In the figures:
FIG 1 is a block diagram of the wireless handset components.
FIG 2 is a block diagram of the base station components.
FIG 3 is a representative diagram of the wireless Voice-over-Internet-Protocol system.
FIG 4 is a state diagram demonstrative of the operation of the Voice-over-Internet-Protocol system.
FIG 5 is a flow chart demonstrative of the operation of the Voice-over-Internet-Protocol system.

### Detailed Description of Preferred and Alternate Embodiments

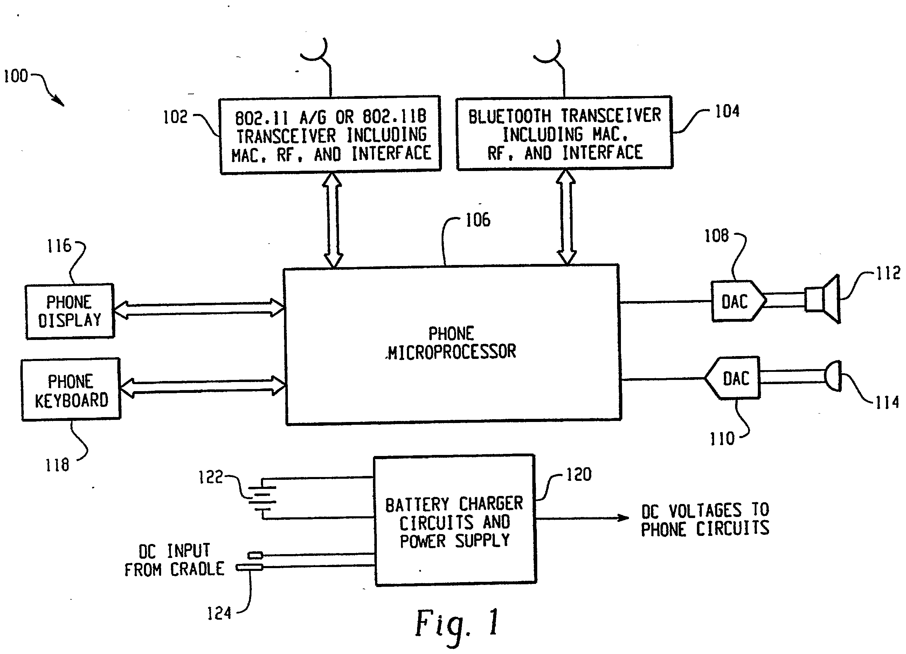

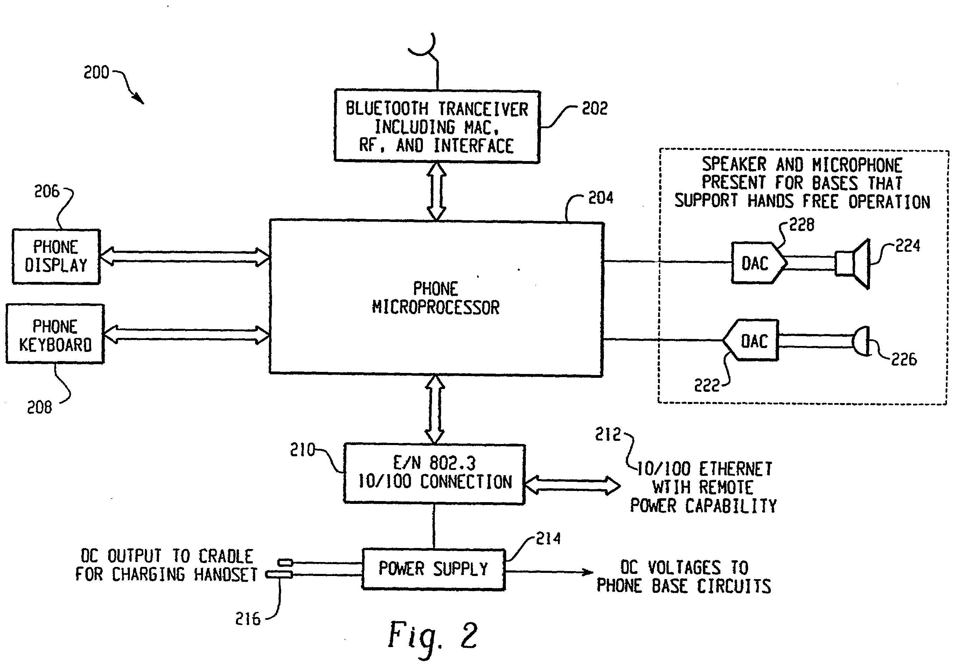

The present invention is directed to a system and method for sending and receiving Voice-over-Internet-Protocol over a wireless computer network utilizing a hybrid wireless Voice-over-Internet-Protocol telephone. Although the present invention is described as enabling a wireless handset to function as a wireless Voice-over-Internet-Protocol telephone using a IEEE 802.11x wireless local area network and a Bluetooth wireless personal area network, it will be appreciated by those skilled in the art that the present invention is also suitably designed to incorporate any other wireless communication, including but not limited to, infrared, cellular, and cordless PSTN. Throughout this description, the preferred embodiment and examples shown should be considered as exemplars, rather than limitations, of the present invention. The hybrid wireless Voice-over-Internet-Protocol telephone comprises a wireless handset (FIG 1) and a base station (FIG. 2), as explained in greater detail below.

Referring first to FIG. 1, there is shown a block diagram of a wireless handset 100 capable of transmitting and receiving Voice-over-Internet-Protocol over both a wireless personal area network and a wireless local area network. The wireless handset 100 contains both an 802.11x transceiver 102 and a Bluetooth transceiver 104. The 802.11x transceiver 102 is operatively coupled to the microprocessor 106. The Bluetooth transceiver 104 is also operatively coupled to the microprocessor 106. The wireless handset 100 is capable of receiving Voice-over-Internet-Protocol packets over either the 802.11x transceiver 102 or the Bluetooth transceiver 104. The microprocessor 106 is also connected to a digital-to-analog converter 108 and an analog-to-digital converter 110. As Voice-over-Internet-Protocol packets are received by either the 802.11x transceiver 102 or the Bluetooth transceiver 104, the microprocessor 106 must process those packets and translate the Voice-over-Internet-Protocol packets into digital signals for the digital-to-analog converter 108 to convert. Once the packets are in an analog format, the digital-to-analog converter 108 transmits the analog signal to a speaker 112 for a user to hear a caller. In a similar manner, a microphone 114 receives an analog voice signal from the user and transmits the analog signal to the analog-to-digital converter 110. The analog-to-digital converter 110 converts the analog signal to a digital format, whereby the microprocessor 106 can translate the digital signal into Voice-over-Internet-Protocol packets. These Voice-over-Internet-Protocol packets containing the user's outgoing voice signal are then transmitted via either the 802.11x transceiver 102 or the Bluetooth transceiver 104 to the caller.

A phone display 116 is coupled to the microprocessor 106 to provide a user with visual information regarding the incoming or outgoing telephone call. The phone display 116 may be of any display known in the art, such as a liquid crystal display, and capable of visually displaying any manner of information sent or received by the user. A user interface in the form of an alpha-numeric keypad 118 is connected to the microprocessor 106. The keypad 118 is provided to enable a user to dial a number or enter text messages. The design of telephone keypads are well known in the art and any manner of such keypad is sufficient for the present invention.

The wireless handset 100 also contains a portable power supply 120. The power supply 120 comprises a power source 122 (as shown, a rechargeable battery) and battery connections 124 for DC voltage input from a charging cradle. Mobile devices known in the art typically draw power from rechargeable batteries and it will be appreciated by those skilled in the art that any portable power supply known in the art is capable of providing the power to the wireless handset 100.

Referring now to FIG. 2, there is shown a block diagram of a base station 200 capable of transmitting and receiving Voice-over-Internet-Protocol over a both a wireless personal area network and a wired local area network. The base station 200 in the preferred embodiment is configured with a Bluetooth transceiver 202. It will be apparent to one skilled in the art that any manner of establishing a wireless personal area network will enable the base station 200 to function with the wireless handset 100, the only requirement being that the base station 200 and the wireless handset 100 each have the same transceiver for the wireless personal area network. The Bluetooth transceiver 202 of base station 200 is operatively coupled to a base station microprocessor 204. The base station 200 is also equipped with a network interface card 210. In the preferred embodiment, the network interface card 210 is an Ethernet 10/100 interface card, however, depending upon the local area network, the network interface card 210 may be any network interface card known in the art capable of connecting the base station 200 to the local area network. The network interface card 210 is connected to a 10/100 Ethernet with Remote Power Capability 212.

Connected to the microprocessor 204 are a base phone display 206 and a base alpha-numeric keypad 208. The display 206 and keypad 208 may be of any known in the art. The display 206 is configured to provide a user with the same information as may be garnered from the phone display 116. The keypad 208 may be configured to provide a user with the same functions as phone keypad 118, or more functions. Power is supplied either through the 10/100 Ethernet with Remote Power Capability 212 or via a power supply 214. The power supply 214 may also be equipped to provide DC power output to a charging cradle 216 for charging the power source 122 of the wireless handset 100.

FIG. 2 also depicts an alternate embodiment of the base station 200 through the addition of a speaker phone component 218. The speaker phone component 218 comprises a speaker 224 coupled to a digital-to-analog converter 220 and a microphone 226 coupled to an analog-to-digital converter 222. This alternate embodiment of the present invention provides the user with the ability to utilize the Voice-over-Internet-Protocol telephone system while recharging the power source 122 of the wireless handset 100, or to provide the user with the ability to conduct telephone conversations, conference calls, voice-activated dialing, etc., without having to hold the wireless handset 100, e.g., "hands-free" operations.

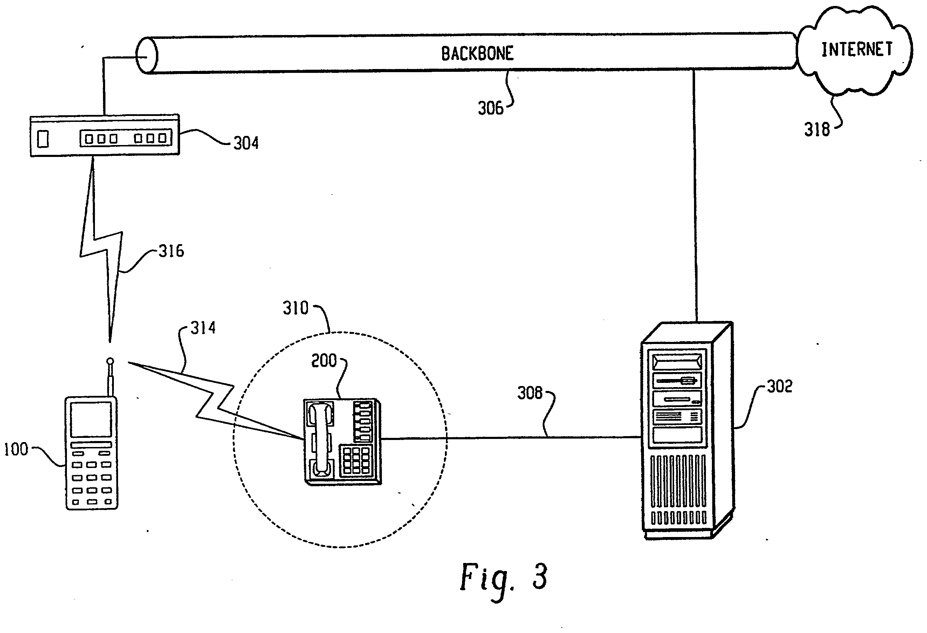

A representative diagram of the wireless Voice-over-Internet-Protocol telephone system is shown in FIG 3. The system as shown allows two different wireless computer networks to interact and enable the use of power saving wireless personal area network connections when available. As shown, a wireless handset 100 is capable of communicating with the wireless personal area network via the base station 200, or with the wireless local area network via an access point 304. It should be apparent to one skilled in the art that multiple access points may be contained in a given wireless local area network, and the present invention is not limited, and should not be so construed as to be limited to the single access point depicted in FIG 3. Returning to the system presented in FIG. 3, incoming and outgoing data is transported over backbone 306. Backbone 306 may be any standard network well known in art, including but not limited to a LAN, a WAN, an Ethernet, an Internet, an Intranet, or a combination of these or other networks. As shown in the embodiment of FIG 3, backbone 306 is connected via a server (not shown) to the Internet 318. Incoming Voice-over-Internet-Protocol packets are first sent to a phone controller 302. These packets may originate from either an outside caller dialing the user or via another Voice-over-Internet-Protocol telephone already on the local network. The phone controller 302 is represented in the present diagram as a separate physical device, however the phone controller 302 may be a function of a server or other device operating on the local area network.

As the Voice-over-Internet-Protocol packets arrive at the phone controller 302, they are directed either over a wired local area network connection 308 to the base station 200, or routed to the access point 304 via the backbone 306. Depending upon the location of the wireless handset 100, the phone controller 302 will direct the incoming Voice-over-Internet-Protocol packets to either the base station 200 or the access point 304. The base station 200 and the wireless handset 100 are equipped to communicate through a Bluetooth connection 314 when within the wireless personal area network 310. The wireless personal area network 310, as shown in FIG. 3, is of a smaller operating radius than that of the wireless 802.11x local area network. When the wireless handset 100 is within range of the base station 200, within the wireless personal area network 310, a signal is sent to the controller 302 indicating that transmission of incoming and outgoing Voice-over-Internet-Protocol packets should be sent over the wired local area connection 308. When the wireless handset 100 is outside the range of the base station 200, the Bluetooth transceiver 104 of the wireless handset 100 indicates a loss of signal to the microprocessor 106. Such an indication activates the 802.11x transceiver 102 of the wireless handset 100. The 802.11x transceiver 102 searches for an access point 304 to establish an 802.11x connection 316 with the phone controller 302 over the backbone 306.

As the Bluetooth connection 314 requires less power to maintain than that of the 802.11x connection 316, the wireless handset 100 will immediately establish or re-establish a connection with the base station 200 when within the wireless personal area network 310. It will be appreciated by one of ordinary skill in the art that the system as shown is capable of transmitting data in forms other than Voice-over-Internet-Protocol packets and the display 116 and the keypad 118 of the wireless handset 100 and the display 206 and the keypad 208 of the base station 200 allow the user to enter and receive such other data.

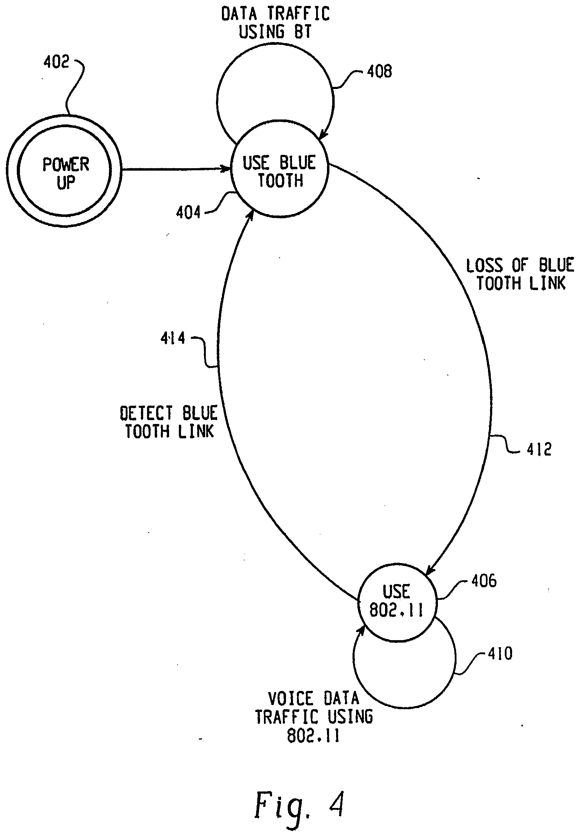

Referring now to FIG. 4, there is shown a state diagram of the wireless Voice-over-Internet-Protocol system. As shown, the system begins at state 402, power up. It is here that the wireless handset 100 is turned on. Upon power up 420, the wireless handset 100 moves to the Bluetooth use state 404. Upon receipt of data traffic using Bluetooth 408, the wireless handset 100 will remain in state 404. The loss of the Bluetooth link at 412 transfers the wireless handset 100 state from Bluetooth 404 to an 802.11 use state 406. The wireless handset 100 will remain in the 802.11 use state 406 provided that voice data traffic continues 410 to be received. Upon the detection of a Bluetooth link 414, the wireless handset 100 will leave the 802.11 use state 406 and return to the Bluetooth use state 404.

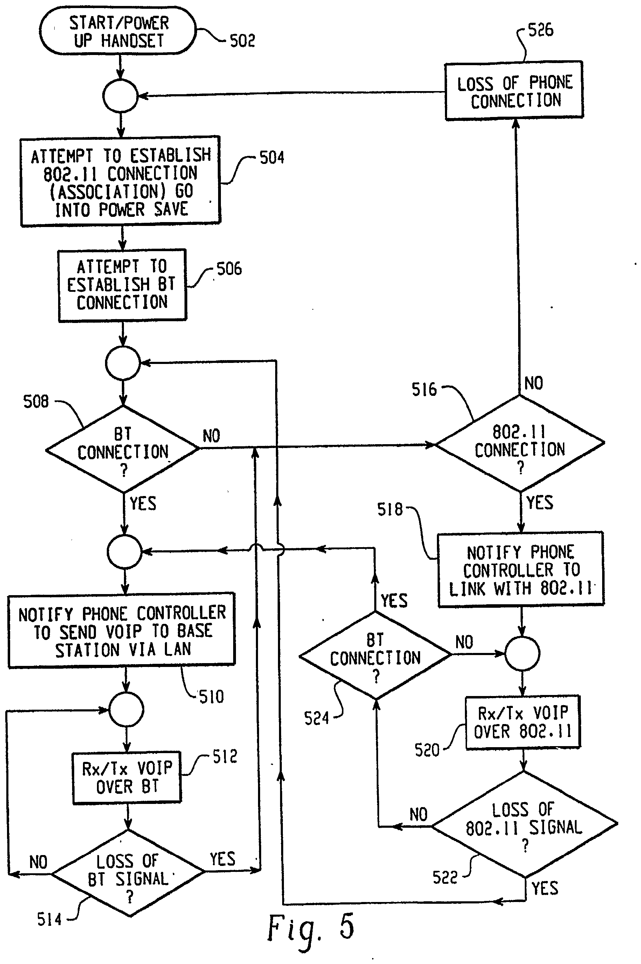

FIG. 5 represents a flow chart of the wireless handset 100 in operation sending and receiving Voice-over-Internet-Protocol packets. Upon power up in step 502, the wireless handset 100 activates its 802.11x transceiver 102. The wireless handset 100 then attempts to establish a connection 316 with the local area network using the 802.11x transceiver 102 in step 504. Regardless of whether or not an 802.11x connection is established in step 504, the wireless handset 100 attempts to establish a Bluetooth connection 314 in step 506. At step 508, the wireless handset 100 then determines if a Bluetooth connection 314 has been made. A positive determination in step 508 leads to the notification of the phone controller 302 to send Voice-over-Internet-Protocol to the base station 200 via the local area network in step 510. At step 508, the Bluetooth connection 314 indicates to the 802.11x transceiver 102 to enter power save mode and await a need to re-activate. The phone controller 302 then sends the Voice-over-Internet-Protocol to the base station 200 for transmission over the Bluetooth connection 314 using the wireless personal area network connection 310 in step 512. In step 514, the wireless handset 100 determines that the signal from the Bluetooth connection 314 has not been lost wherein the Voice-over-Internet-Protocol continues to be transmitted over the Bluetooth connection 314 in step 512.

In step 508 the wireless handset determines that there is no Bluetooth connection 314, the system progresses to step 516. At 516, the microprocessor 106 of the wireless handset 100 has received an indication from the Bluetooth transceiver 104 that there is no connection with the base station 200 and that the wireless handset 100 should re-activate the 802.11x transceiver 102 up from power save mode. The wireless handset 100 will then establish the 802.11x connection 316 with the phone controller 302 via access point 304 at step 518. Voice-over-Internet-Protocol packets are then sent over the 802.11x connection 316 to the access point 304 for communication with the phone controller 302 at step 520. The transmission of the Voice-over-Internet-Protocol packets in step 520 continues over the 802.11x connection 316 until at step 522, where the system determines if there has been a loss of the 802.11x signal. A negative determination in step 522 progresses the system to step 524, where a query arises as to the presence of a Bluetooth signal. If a Bluetooth signal is detected at step 524, the wireless handset notifies the phone controller in step 510 to send Voice-over-Internet-Protocol packets via the wired local area network to the base station 200 and the 802.11x transceiver returns to power save mode.

Upon determination that the 802.11x signal has been lost in step 522, the wireless handset 100 returns to step 508 for a determination if there is a Bluetooth connection. A positive determination in step 508 progresses to step 510 and so on. A negative determination in step 508 leads to a determination if there is an 802.11x signal present in step 516. With no 802.11x signal present in step 516, the wireless handset determines there is a loss of phone connection in step 526 and the system returns to step 504.

A loss of signal in step 508 of a loss of signal allows the wireless handset 100 to proceed to step 516, wherein the 802.11x transceiver 102 is re-activated. An 802.11x connection is thereafter established with the access point 304 and Voice-over-Internet-Protocol packets are transmitted over the 802.11x wireless local area network via the 802.11x connection 316 between the access point 304 and the wireless handset 100. The connections referred to above utilizing Bluetooth and 802.11 transceivers require the proper authentication protocols for communications between a wireless local or personal area network. Such authentication protocols are well known in the art.

The foregoing description of a preferred embodiment of the invention has been presented for purposes of illustration and description. It is not intended to be exhaustive or to limit the invention to the precise form disclosed. Obvious modifications or variations are possible in light of the above teachings. The embodiment was chosen and described to provide the best illustration of the principles of the invention and its practical application to thereby enable one of the ordinary skilled in the art to utilize the invention in various embodiments and with various modifications as are suited to the particular use contemplated. All such modifications and variations are within the scope of the invention as determined by the appended claims when interpreted in accordance to the breadth to which they are fairly, legally and equitably entitled.

## Claims

1. A wireless voice over Internet Protocol telephone, comprising:
a wireless handset (100) comprising a wireless personal area network transceiver (104) configured to communicate with a wireless personal area network, a wireless local area network transceiver (102) configured to communicate with a wireless local area network, and a selecting device (106) for selecting between the wireless personal area network transceiver (104) and the wireless local area network transceiver (102); and
a base station (200) comprising a wireless personal area network transceiver (202) configured to communicate with the wireless personal area network transceiver (104) of the wireless handset (100) via the wireless personal area network;
wherein the wireless handset (100) is configured to send and receive voice over Internet Protocol packets to and from a caller via a telephone controller (302), the telephone controller (302) being configured to communicate with the base station (200) and an access point (304), the access point (304) being configured to communicate with the wireless handset via the wireless local area network;
wherein the selecting device (106) is configured to select the wireless personal area network transceiver (104) for routing the voice over Internet Protocol packets through the wireless personal area network when the wireless personal area network transceiver (104) detects a wireless personal area network connection, otherwise the selecting device (106) is configured to select the wireless local area network transceiver (102);
wherein, when the wireless personal area network transceiver (104) is unable to detect a wireless personal area network connection, the wireless handset (100) is configured to establish a connection with the telephone controller (302) via the wireless local area network transceiver (102) to route the voice over Internet Protocol packets through the wireless local area network; and
wherein, when the wireless personal area network transceiver (104) is able to detect a wireless personal area network connection, the wireless handset (100) is configured to notify the telephone controller (302) to route the voice over Internet Protocol packets through the wireless personal area network.

2. The wireless voice over Internet Protocol telephone of claim 1, wherein the wireless personal area network transceiver of the base station is a Bluetooth transceiver and the wireless personal area network transceiver of the wireless handset is a Bluetooth transceiver.

3. The wireless voice over Internet Protocol telephone of claim 1, wherein the wireless personal area network transceiver of the base station is an infrared transceiver and the wireless personal area network transceiver of the wireless handset is an infrared transceiver.

4. The wireless voice over Internet Protocol telephone of any preceding claim, wherein the wireless local area network transceiver is a higher powered transceiver than the wireless personal area network transceiver.

5. The wireless voice over Internet Protocol telephone of any preceding claim, wherein the wireless local area network transceiver is an 802.11 x transceiver.

6. The wireless voice over Internet Protocol telephone of claim 1, wherein the wireless personal area network transceiver is an infrared transceiver.

7. The wireless voice over Internet Protocol telephone of claim 1, wherein the wireless personal area network transceiver is a Bluetooth transceiver.

8. A system for sending and receiving voice over Internet Protocol using a wireless voice over Internet Protocol telephone, comprising:
a wireless voice over Internet Protocol telephone (100) according to any preceding claim;
a telephone controller (302) configured to communicate voice over Internet Protocol packets between a caller and the wireless voice over Internet Protocol telephone (100); and
a wireless local area network access point (304) configured to communicate with the telephone controller (302) and to communicate with the wireless voice over Internet Protocol telephone (100) via the wireless local area network.

9. A method for sending and receiving voice over Internet Protocol using a wireless voice over Internet Protocol telephone according to any one of claims 1 to 7, comprising the steps of:
attempting to establish a wireless connection with the base station via the wireless personal area network;
determining whether the wireless connection over the wireless personal area network is established;
when the wireless connection over the wireless personal area network is not determined to be established, establishing a connection to the telephone controller with the wireless local area network via the access point to route the voice over Internet Protocol packets through the wireless local area network when the wireless connection over the wireless personal area network is determined to be established, notifying the telephone controller to route the voice over Internet Protocol packets through the wireless personal area network.

10. The method of claim 9, further comprising re-establishing the wireless connection with the base station when the wireless handset returns to being within range of the base station.

11. The method of claim 10, further comprising switching power off to the wireless local area network transceiver after the wireless connection with the base station is reestablished.

## Patentansprüche

1. Drahtloses Voice-over-Internet-Protocol-Telefon, umfassend:
ein drahtloses Handgerät (100), das einen drahtlosen Persönliches-Netzwerk-Transceiver (104), der zur Kommunikation mit einem drahtlosen persönlichen Netzwerk konfiguriert ist, einen drahtlosen Lokales-Netzwerk-Transceiver (102), der zur Kommunikation mit einem drahtlosen lokalen Netzwerk konfiguriert ist, und eine Auswählvorrichtung (106) zum Wählen zwischen dem drahtlosen Persönliches-Netzwerk-Transceiver (104) und dem drahtlosen Lokales-Netzwerk-Transceiver (102) aufweist; und
eine Basisstation (200), die einen drahtlosen Persönliches-Netzwerk-Transceiver (202), der zur Kommunikation mit dem drahtlosen Persönliches-Netzwerk-Transceiver (104) des drahtlosen Handgeräts (100) über das drahtlose persönliche Netzwerk konfiguriert ist, aufweist;
wobei das drahtlose Handgerät (100) zum Senden und Empfangen von Voice-over-Internet-Protocol-Paketen an bzw. von einem Rufteilnehmer über einen Telefonsteuerteil (302) konfiguriert ist, wobei der Telefonsteuerteil (302) zur Kommunikation mit der Basisstation (200) und einem Zugangspunkt (304) konfiguriert ist, wobei der Zugangspunkt (304) zur Kommunikation mit dem drahtlosen Handgerät über das drahtlose lokale Netzwerk konfiguriert ist;
wobei die Auswählvorrichtung (106) zum Wählen des drahtlosen Persönliches-Netzwerk-Transceivers (104) zum Routen der Voice-over-Internet-Protocol-Pakete durch das drahtlose persönliche Netzwerk, wenn der drahtlose Persönliches-Netzwerk-Transceiver (104) eine Verbindung mit einem drahtlosen persönlichen Netzwerk erkennt, konfiguriert ist, ansonsten die Auswählvorrichtung (106) zum Wählen des drahtlosen Lokales-Netzwerk-Transceiver (102) konfiguriert ist;
wobei das drahtlose Handgerät (100), wenn der drahtlose Persönliches-Netzwerk-Transceiver (104) keine Verbindung mit einem drahtlosen persönlichen Netzwerk erkennen kann, dafür konfiguriert ist, eine Verbindung mit dem Telefonsteuerteil (302) über den drahtlosen Lokales-Netzwerk-Transceiver (102) herzustellen, um Voice-over-Internet-Protocol-Pakete durch das drahtlose lokale Netzwerk zu routen; und
wobei das drahtlose Handgerät (100), wenn der drahtlose Persönliches-Netzwerk-Transceiver (104) eine Verbindung mit einem drahtlosen persönlichen Netzwerk erkennt, dafür konfiguriert ist, den Telefonsteuerteil (302) zu benachrichtigen, die Voice-over-Internet-Protocol-Pakete durch das drahtlose persönliche Netzwerk zu routen.

2. Drahtloses Voice-over-Internet-Protocol-Telefon nach Anspruch 1, wobei der drahtlose Persönliches-Netzwerk-Transceiver der Basisstation ein Bluetooth-Transceiver ist und der drahtlose Persönliches-Netzwerk-Transceiver des drahtlosen Handgeräts ein Bluetooth-Transceiver ist.

3. Drahtloses-Voice-over-Internet-Protocol-Telefon nach Anspruch 1, wobei der drahtlose Persönliches-Netzwerk-Transceiver der Basisstation ein Infrarot-Transceiver ist und der drahtlose Persönliches-Netzwerk-Transceiver des drahtlosen Handgeräts ein Infrarot-Transceiver ist.

4. Drahtloses Voice-over-Internet-Protocol-Telefon nach einem der vorhergehenden Ansprüche, wobei der drahtlose Lokales-Netzwerk-Transceiver ein leistungsstärkerer Transceiver als der drahtlose Persönliches-Netzwerk-Transceiver ist.

5. Drahtloses Voice-over-Internet-Protocol-Telefon nach einem der vorhergehenden Ansprüche, wobei der drahtlose Lokales-Netzwerk-Transceiver ein 802.11x-Transceiver ist.

6. Drahtloses Voice-over-Internet-Protocol-Telefon nach Anspruch 1, wobei der drahtlose Persönliches-Netzwerk-Transceiver ein Infrarot-Transceiver ist.

7. Drahtloses Voice-over-Internet-Protocol-Telefon nach Anspruch 1, wobei der drahtlose Persönliches-Netzwerk-Transceiver ein Bluetooth-Transceiver ist.

8. System zum Senden und Empfangen von Voice over Internet Protocol unter Verwendung eines drahtlosen Voice-over-Internet-Protocol-Telefons, umfassend:
ein drahtloses Voice-over-Internet-Protocol-Telefon (100) nach einem der vorhergehenden Ansprüche;
einen Telefonsteuerteil (302), der zur Übermittlung von Voice-over-Internet-Protocol-Paketen zwischen einem Rufteilnehmer und dem drahtlosen Voice-over-Internet-Protocol-Telefon (100) konfiguriert ist; und
einen Zugangspunkt für drahtlose lokale Netzwerke (304), der zur Kommunikation mit dem Telefonsteuerteil (302) und zur Kommunikation mit dem Voice-over-Internet-Protocol-Telefon (100) über das drahtlose lokale Netzwerk konfiguriert ist.

9. Verfahren zum Senden und Empfangen von Voice over Internet Protocol unter Verwendung eines drahtlosen Voice-over-Internet-Protocol-Telefons nach einem der Ansprüche 1 bis 7, das die folgenden Schritte aufweist:
Versuchen, eine drahtlose Verbindung mit der Basisstation über das drahtlose persönliche Netzwerk herzustellen;
Bestimmen, ob die drahtlose Verbindung über das drahtlose persönliche Netzwerk hergestellt worden ist;
wenn bestimmt wird, dass die drahtlose Verbindung über das drahtlose persönliche Netzwerk nicht hergestellt worden ist, Herstellen einer Verbindung mit dem Telefonsteuerteil mit dem drahtlosen lokalen Netzwerk über den Zugangspunkt zum Routen der Voice-over-Internet-Protocol-Pakete durch das drahtlose lokale Netzwerk, wenn bestimmt wird, dass die drahtlose Verbindung über das drahtlose persönliche Netzwerk hergestellt worden ist, Benachrichtigen des Telefonsteuerteils, die Voice-over-Internet-Protocol-Pakete durch das drahtlose persönliche Netzwerk zu routen.

10. Verfahren nach Anspruch 9, das ferner das Wiederherstellen der drahtlosen Verbindung mit der Basisstation aufweist, wenn das drahtlose Handgerät wieder in die Reichweite der Basisstation kommt.

11. Verfahren nach Anspruch 10, das ferner das Abschalten der Energieversorgung des drahtlosen Lokales-Netzwerk-Transceivers nach Wiederherstellung der drahtlosen Verbindung mit der Basisstation aufweist.

## Revendications

1. Téléphone sans fil de voix sur protocole Internet, comprenant :
un combiné sans fil (100), comprenant un émetteur-récepteur de réseau personnel sans fil (104) conçu pour communiquer avec un réseau personnel sans fil, un émetteur-récepteur de réseau local sans fil (102) conçu pour communiquer avec un réseau local sans fil, et un dispositif de sélection (106) permettant de sélectionner entre l'émetteur-récepteur de réseau personnel sans fil (104) et l'émetteur-récepteur de réseau local sans fil (102) ; et
une station de base (200), comprenant un émetteur-récepteur de réseau personnel sans fil (202) conçu pour communiquer avec l'émetteur-récepteur de réseau personnel sans fil (104) du combiné sans fil (100) par l'intermédiaire du réseau personnel sans fil ;
le combiné sans fil (100) étant conçu pour envoyer à un appelant et recevoir de l'appelant des paquets de voix sur protocole Internet par l'intermédiaire d'un contrôleur de téléphone (302), le contrôleur de téléphone (302) étant conçu pour communiquer avec la station de base (200) et un point d'accès (304), le point d'accès (304) étant conçu pour communiquer avec le combiné sans fil par l'intermédiaire du réseau local sans fil ;
le dispositif de sélection (106) étant conçu pour sélectionner l'émetteur-récepteur de réseau personnel sans fil (104) pour acheminer les paquets de voix sur protocole Internet par l'intermédiaire du réseau personnel sans fil quand l'émetteur-récepteur de réseau personnel sans fil (104) détecte une connexion de réseau personnel sans fil, sinon le dispositif de sélection (106) étant conçu pour sélectionner l'émetteur-récepteur de réseau local sans fil (102) ;
le combiné sans fil (100) étant conçu, quand l'émetteur-récepteur de réseau personnel sans fil (104) est incapable de détecter une connexion de réseau personnel sans fil, pour établir une connexion avec le contrôleur de téléphone (302) par l'intermédiaire de l'émetteur-récepteur de réseau local sans fil (102) afin d'acheminer les paquets de voix sur protocole Internet par l'intermédiaire du réseau local sans fil ; et
le combiné sans fil (100) étant conçu, quand l'émetteur-récepteur de réseau personnel sans fil (104) est capable de détecter une connexion de réseau personnel sans fil, pour notifier au contrôleur de téléphone (302) d'acheminer les paquets de voix sur protocole Internet par l'intermédiaire du réseau personnel sans fil.

2. Téléphone sans fil de voix sur protocole Internet selon la revendication 1, dans lequel l'émetteur-récepteur de réseau personnel sans fil de la station de base est un émetteur-récepteur Bluetooth, et l'émetteur-récepteur de réseau personnel sans fil du combiné sans fil est un émetteur-récepteur Bluetooth.

3. Téléphone sans fil de voix sur protocole Internet selon la revendication 1, dans lequel l'émetteur-récepteur de réseau personnel sans fil de la station de base est un émetteur-récepteur infrarouge, et l'émetteur-récepteur de réseau personnel sans fil du combiné sans fil est un émetteur-récepteur infrarouge.

4. Téléphone sans fil de voix sur protocole Internet selon l'une quelconque des revendications précédentes, dans lequel l'émetteur-récepteur de réseau local sans fil est un émetteur-récepteur dont la puissance est supérieure à celle de l'émetteur-récepteur de réseau personnel sans fil.

5. Téléphone sans fil de voix sur protocole Internet selon l'une quelconque des revendications précédentes, dans lequel l'émetteur-récepteur de réseau local sans fil est un émetteur-récepteur 802.11x.

6. Téléphone sans fil de voix sur protocole Internet selon la revendication 1, dans lequel l'émetteur-récepteur de réseau personnel sans fil est un émetteur-récepteur infrarouge.

7. Téléphone sans fil de voix sur protocole Internet selon la revendication 1, dans lequel l'émetteur-récepteur de réseau personnel sans fil est un émetteur-récepteur Bluetooth.

8. Système d'envoi et de réception de voix sur protocole Internet au moyen d'un téléphone sans fil de voix sur protocole Internet, comprenant :
un téléphone sans fil de voix sur protocole Internet (100) selon l'une quelconque des revendications précédentes ;
un contrôleur de téléphone (302), conçu pour communiquer des paquets de voix sur protocole Internet entre un appelant et le téléphone sans fil de voix sur protocole Internet (100) ; et
un point d'accès de réseau local sans fil (304), conçu pour communiquer avec le contrôleur de téléphone (302) et pour communiquer avec le téléphone sans fil de voix sur protocole Internet (100) par l'intermédiaire du réseau local sans fil.

9. Procédé d'envoi et de réception de voix sur protocole Internet au moyen d'un téléphone sans fil de voix sur protocole Internet selon l'une quelconque des revendications 1 à 7, comprenant les étapes consistant à :
tenter d'établir une connexion sans fil avec la station de base par l'intermédiaire du réseau personnel sans fil ;
déterminer si la connexion sans fil sur le réseau personnel sans fil est établie ;
quand il n'est pas déterminé que la connexion sans fil sur le réseau personnel sans fil est établie, établir une connexion au contrôleur de téléphone avec le réseau local sans fil par l'intermédiaire du point d'accès afin d'acheminer les paquets de voix sur protocole Internet par l'intermédiaire du réseau local sans fil, et quand il est déterminé que la connexion sans fil sur le réseau personnel sans fil est établie, notifier au contrôleur de téléphone d'acheminer les paquets de voix sur protocole Internet par l'intermédiaire du réseau personnel sans fil.

10. Procédé selon la revendication 9, consistant en outre à rétablir la connexion sans fil avec la station de base quand le combiné sans fil renvoie qu'il est dans la plage de la station de base.

11. Procédé selon la revendication 10, consistant en outre à éteindre l'émetteur-récepteur de réseau local sans fil une fois la connexion sans fil avec la station de base rétablie.
